# EUROPEAN PATENT SPECIFICATION

(11) **EP 2 081 446 B1**
(45) Date of publication and mention of the grant of the patent: **19.01.2011**
(21) Application number: 07844599.6
(22) Date of filing: 25.10.2007
(51) Int. Cl.: A23L 1/0526, A23C 9/12

(54) **IMPROVED THICKENER COMPOSITION FOR FOOD PRODUCTS**
VERBESSERTES VERDICKUNGSMITTEL FÜR NAHRUNGSMITTELPRODUKTE
COMPOSITION ÉPAISSISSANTE AMÉLIORÉE POUR PRODUITS ALIMENTAIRES

(30) Priority: 27.10.2006 US 863155 P
(43) Date of publication of application: 29.07.2009
(73) Proprietor: Lubrizol Advanced Materials, Inc., Cleveland, OH 44141-3247 (US)
(72) Inventor: HUBER, Peter, 83064 Raubling (DE)
(74) Representative: von Kreisler Selting Werner
(86) International application number: PCT/US2007/082463
(87) International publication number: WO 2008/057772

(56) References cited:
- EP-A- 1 658 775
- US-A- 4 661 475
- US-A1- 2005 233 046

## Description

### Field of the Invention

The present invention relates to improved thickener compositions comprising hydrocolloids obtained from the endosperm of seeds (hereinafter "hydrocolloids"). More specifically, the present invention relates to thickener compositions comprising a synergistic combination of cassia hydrocolloid and highly esterified pectin and its use as a thickening agent in food and fodder. The synergistic combination exhibits an enhanced rheology and stabilization affect over that of cassia hydrocolloid or pectin alone.

### Background of the Invention

Hydrocolloids are derived from polysaccharides that can be extracted from the endosperm of seeds of plants, shrubs and trees of the families Leguminosae and Fabraceae. The seeds of the tamarind tree, Tamarindus indica L. (tamarind gum); Greek hay, Trigonella foenum-graecum L. (fenugreek gum); wild senna and sicklepod plants, Cassia tora and Cassia obtusifolia (cassia gum); the carob tree Ceratonia siliqua L. (locust bean gum; LBG); the tara bush Caesalpinia spinosa L. (tara gum), and the guar plant Cyamopsis tetragonoloba L. (guar gum) are common sources for endosperm material. The polysaccharides obtained from these seeds are known to act as thickening and gelling agents in aqueous systems. The polysaccharides obtained from fenugreek gum, cassia gum, locust bean gum, tara gum, and guar gum are known as polygalactomannans. A polygalactomannan is composed of 1→4-linked β-D-mannopyranosyl units with recurring 1→6-linked α-D-galactosyl side groups branching from the number 6 carbon of a mannopyranose residue in the backbone. The galactomannan polymers of the different species of the Leguminosae and Fabraceae families defer from one another in the frequency of the occurrence of the galactosyl side units branching from the polymannopyranose backbone. The average ratio of D-mannosyl to D-galactosyl units in the polygalactomannan contained in fenugreek gum is approximately 1 : 1, in guar gum approximately 2 : 1, for tara gum approximately 3 : 1, for locust bean gum approximately 4 : 1, and approximately 5 : 1 for cassia gum. For illustrative purposes, the polygalactomannan obtained from cassia gum is schematically represented in the structure below: 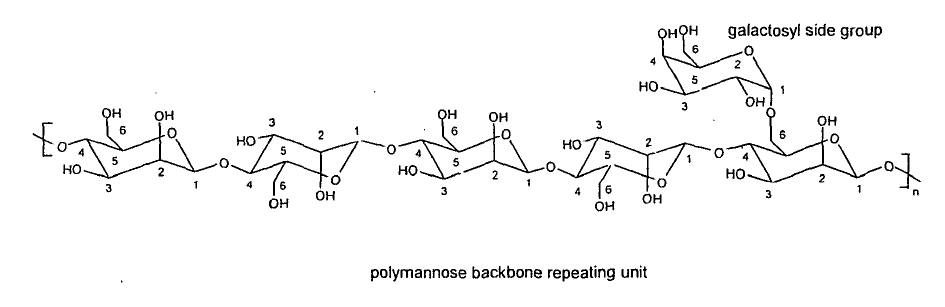 where n represents the number of repeating units in the galactomannan polymer. In one aspect, n represents an integer from about 10 to about 50. In another aspect, n represents and integer from about 15 to about 35, and in still another aspect from about 20 to about 30. In still another aspect, the polygalactomannan has a number average molecular weight of at least 100,000. In another aspect, the number average molecular weight ranges from about from about 150,000 to about 500,000, and in still another aspect from about 200,000 to about 300,000 (molecular weights determined by the GPC method using a polystyrene standard). In a further aspect, the number average molecular weight can range from 500,000 to over 1,000,000.

Typically, the endosperm flour extracted from the seeds of cassia, locust bean, tara and guar contains 3 to 12% water, up to 2% fat, up to 7% raw protein, up to 4% raw fiber, up to 2% ash, and at least 75% residual polysaccharide. Methods are known for preparing a purer galactomannan with improved properties for a broader spectrum of use such as, for instance, for use in food and fodder products for human and animal consumption. For example, in known processes, cassia endosperm is extracted from the seeds of Cassia tora or from Cassia obtusifolia by heating the ripe seeds followed by subjecting them to mechanical stress such as crushing or grinding. This treatment results in the pulverization of the germ and the endosperm hull. The intact seed endosperm is isolated from the seedling and hull fragments by sifting and it is then subjected to a pulverization process such as described in U.S. Patent No. 2,891,050. The cassia endosperm flour prepared in this way has desired gelling properties but retains a specific fruity aroma and a slightly bitter taste. Moreover, the flour has a yellow to slight-brown color which is aesthetically displeasing.

In U.S. Patent No. 4,826,700, gelling and thickening agents based on a mixture of cassia galactomannans and carrageenan, agar and/or xanthan are disclosed.

U.S. Patent No. 4,840,811 discloses a process for producing cassia endosperm flour from the endosperm of Cassia tora. The obtained product is colorless, odorless and tasteless. In the disclosed method, the endosperm is solvent extracted at least once to reduce impurities such as derivatives of anthraquinones. The extraction solvent comprises a mixture of water and an alkanol and/or acetone. Following drying, the endosperm is converted to a desired degree of fineness.

Independent from the fact that the gelling agent should provide food products with a gelatinous consistency while not affecting the product in terms of taste, odor and color properties, the final hydrocolloid resulting from these prior processes still contains certain phytochemicals, in particular, derivatives of anthraquinones. This class of compounds has been identified as potentially hazardous to human health (S.O. Mueller, et al., "Food and Chemical Toxicology" 37 (1999), pages 481 to 491).

Typical anthraquinone derivatives suspected of causing undesirable health effects are 1,8-hydroxy anthraquinones such as physcion, chrysophanol, aloe-emodin and rhein as represented by the following formula:

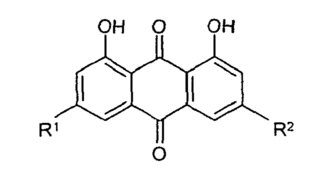

| | | |
|---|---|---|
| Physcion | R¹ = OCH₃ | R² = CH₃ |
| Aloe-emodin | R¹ = H | R² = CH₂OH |
| Rhein | R¹ = H | R² = COOH |
| Chrysophanol | R¹ = H | R² = CH₃ |

As discussed above, U.S. Patent No. 4,840,811 is directed to a method for reducing the level of anthraquinones in cassia gums in an effort to reduce the deleterious odor, color, and taste effects produced by such compounds. The '811 disclosure does not recognize the toxicity problem inherent in the presence of anthraquinones in the gum. However, in order to provide a cassia hydrocolloid which can be safely used for food, fodder, pharmaceutical and personal care purposes, it is imperative that the hydrocolloid is substantially free of potentially hazardous anthraquinones.

United States Patent No. 2,891,050 discloses a process for the production of mucilaginous material from leguminous seeds such as guar, tara and locust bean comprising the steps of tempering the endosperm obtained to a moisture content of 30 to 60% water and flattening the moisturized endosperm by passing it between rollers. In a subsequent step the flattened endosperm is dried and ground. This process is known in the art as the "flaking/grinding" process. The galactomannans prepared according to this process are used as additives in the manufacture of paper, salad dressing, ice cream, bakery products and other foodstuffs.

German published patent application DE 10047278 discloses that endosperm flour of Cassia seeds can be obtained by subjecting the seeds to simple milling processes to separate the endosperm from the husks, followed by grinding the endosperm to yield a desired particle size. The hydrocolloids of cassia galactomannan are disclosed to be suitable for food applications.

Published International patent application WO 2004/113390 discloses a method for producing galactomannan flour such as cassia flour which is substantially colorless, odorless and tasteless and which is largely free of anthraquinones and maintains excellent gelling properties. The disclosed method is suitable for the production of food grade hydrocolloids from common endosperm material such as from the endosperm isolated from the seeds of the tamarind tree, Tamarindus indica L. (tamarind gum); Greek hay, Trigonella foenum-graecum L. (fenugreek gum); wild senna and sicklepod plants, Cassia tora and Cassia obtusifolia (cassia gum); the carob tree Ceratonia siliqua L. (locust bean gum); the tara bush Caesalpinia spinosa L. (tara gum), and the guar plant Cyamopsis tetragonoloba L. (guar gum). The isolated hydrocolloids can be used as an additive for high purity, sensorily sophisticated food products. The disclosure of WO 2004/113390 is fully incorporated herein by reference.

Pectin is classified as a soluble fiber. It is found in most plants, but is most concentrated in citrus fruits (such as oranges, lemons, grapefruits) and apples. Pectin is obtained by aqueous extraction of citrus peels and apple pulp under mildly acidic conditions. Pectin obtained from citrus peels is referred to as citrus pectin. Pectin is widely used in the food industry as a gelling agent to impart a gelled texture to foods, mainly fruit-based foods such as jams and jellies. Chemically, pectin is a polysaccharide containing from about 300 to about 1,000 monosaccharide units. D-Galacturonic acid is the principal monosaccharide unit of pectin. The structure of pectin is complex. Pectin molecules have a linear backbone composed of units of 1→4-linked α-D-galacturonic acid and its methyl ester. The galacturonic acid units may be in the salt form (galacturonate) giving pectin an anionic properties. The majority of the structure consists of homopolymeric partially methylated poly-α-(1→4)-D-galacturonic acid residues but can contain alternating α-(1→2)-L-rhamnosyl-α - (1→4)-D-galacturonosyl sections containing branch-points with mostly neutral side chains (1 - 20 residues) of mainly L-arabinose and D-galactose (rhamnogalacturonan I). Pectins can also contain side chains containing other residues such as D-xylose, L-fucose, D-glucuronic acid, D-apiose, 3-deoxy-D-manno-2-octulosonic acid (Kdo) and 3-deoxy-D-*lyxo*-2-heptulosonic acid (Dha) attached to poly-α-(1→4)-D-galacturonic acid regions. The molecular weight of pectin ranges from 50,000 to 250,000 Daltons. The galacturonic acid residues in pectin may be esterified with methyl groups. The degree of esterification (DE) is a primary determinate of many of the functional properties of commercial pectin. Pectin can be classified on the basis of DE values. Pectin in which 50% or more of the galacturonic acid residues are esterified is called highly esterified (HE) pectin, such as high methoxyl or HM pectin. Pectin in which less than 50% of the galacturonic acid residues are esterified is called low esterified (LE) pectin, such as low methoxy (LM) or LM pectin. For illustrative purposes, pectin includes the following linear structural units in the backbone: 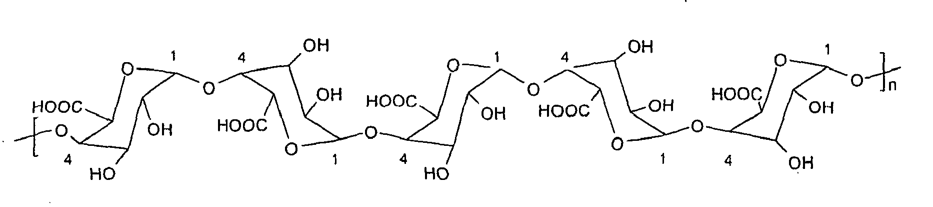 While not shown in the illustrative structural representation above, the carboxylic acid groups can be methylated and/or in the form of carboxylate salts (e.g., ammonium, potassium, and sodium).

The following is representative of a linear structural unit in which the carboxylic acid groups of pectin are esterified (e.g., methylated):

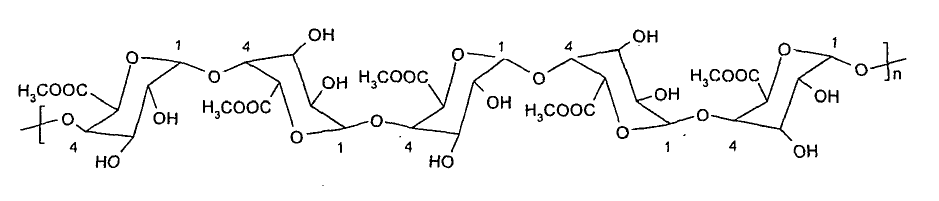

For illustrative purposes the forgoing structural repeating unit is shown as fully esterified. It is to be recognized that free carboxylic acid groups and/or carboxylate salts (e.g., ammonium, potassium, and sodium) can be present along the backbone of the polymer.

In the representative pectin formulae above, n represents the number of repeating units in the polymer backbone. In one aspect, n represents an integer from about 20 to about 250. In another aspect, n represents an integer from about 30 to about 200, and in still another aspect from about 35 to about 150.

Pectins are mainly used as gelling agents, but can also act as thickeners and water binders. Low methoxyl pectins (< 50% DE) form thermo-reversible gels in the presence of calcium ions and at low pH (e.g., 3 - 4.5), whereas high methoxyl pectins (≥50% DE) rapidly form thermally irreversible gels in the presence of sufficient (e.g. 65% by weight) sugars such as sucrose and at low pH (e.g., < 3.5); the lower the methoxyl content, the slower the set. The degree of esterification can be reduced using commercial pectin methylesterase, leading to a higher viscosity and firmer gelling in the presence of Ca²⁺ ions. Highly (2-O- and/or 3-O-galacturonic acid backbone) acetylated pectin from sugar beet is reported to gel poorly but have considerable emulsification ability due to its more hydrophobic nature, but this may be due to associated protein impurities. Accordingly, pectins depending on the source of origin and method of extraction, can exhibit widely varying properties.

While methods for obtaining and utilizing purified food grade galactomannan hydrocolloids have been described, there is no teaching in the literature that recognizes that a combination of cassia hydrocolloid and highly esterified pectin can synergistically induce enhanced rheology (e.g., viscosity build) and stabilization properties, particularly in food and fodder applications which require minimal amounts of additives.

### Brief Description of the Drawings

Figure 1 represents a graph showing the Brookfield viscosities (measured at 20 rpm, at 7°C) of heat treated yogurt (3.9% fat; 3.6% protein; thickener concentration: 0.5%) containing different polygalactomannan thickener additives and stored under different conditions.

Figure 2 represents a graph showing the Brookfield viscosities (measured at 100 rpm, at 7°C) of heat treated yogurt (3.9% fat; 3.6% protein; thickener concentration: 0.5%) containing different polygalactomannan thickener additives and stored under different conditions.

Figure 3 represents a graph showing the Brookfield viscosities (measured at 20 rpm, at 7°C) of heat treated yogurt (3.5% fat; 3.6% protein; thickener concentration: 0.5%) containing different ratios of cassia hydrocolloid and highly methylated pectin. The yogurt samples are stored under different conditions.

### Description of Exemplary Embodiments

Exemplary embodiments in accordance with the present invention will be described. Various modifications, adaptations or variations of such exemplary embodiments described herein may become apparent to those skilled in the art as such are disclosed. It will be understood that all such modifications, adaptations or variations that rely upon the teachings of the present invention, and through which these teachings have advanced the art, are considered to be within the scope and spirit of the present invention.

One exemplary embodiment relates to a thickener composition comprising cassia hydrocolloid (gum) and highly esterified pectin.

Another exemplary embodiment relates to food compositions comprising cassia gum and highly esterified pectin.

A further exemplary embodiment relates to dairy food compositions such as milk derived products (e.g., yogurt and heat-treated yogurt) which contain a combination of cassia gum and highly esterified pectin.

A still further exemplary embodiment relates to a method for improving the rheology and stability of food and fodder compositions by employing a combination of cassia gum and highly esterified pectin therein.

Another exemplary embodiment, relates to food compositions comprising the thickener composition of the invention (i.e., the cassia hydrocolloid and the above (exogenous) highly esterified pectin).

A further exemplary embodiment relates to a method for improving the rheology and stability of food products, such as dairy products.

### Cassia Hydrocolloid

The cassia hydrocolloid is not particularly limited as long as it is suitable to be used for food and fodder applications. Any cassia gum can be used as long as it is of a purity level which allows it to be used in food applications. Most importantly, undesired compounds, such as anthraquinones, should substantially be absent from the cassia hydrocolloid to be used. By "substantially absent" is meant that the total amount of anthraquinones such as physcion, chrysophanol, emodine, aloe-emodin and rhein in the cassia hydrocolloid is about 10 ppm or less in one aspect, less than 2 ppm in another aspect, less than 1 ppm in a further aspect, and less than 0.7 ppm in a still further aspect, based on the cassia hydrocolloid dry solid.

In one exemplary embodiment, a suitable cassia hydrocolloid can be made according to the disclosure of WO 2004/113390, e.g., the cassia hydrocolloid can be made by a method comprising the steps of:
(i) swelling a cassia split with water to form a swollen split composition; optionally followed by dispersing the swollen split composition in a water/organic solvent mixture, and
(ii) at least one step of wet-mincing the composition obtained under (i). Optionally, the method can further comprise the additional steps of:
(iii) adding the minced and swollen split composition obtained in step (ii) to a mixture of water and an organic solvent; and
(iv) separating the water/organic solvent mixture from the minced split composition to obtain the galactomannan hydrocolloid.

Typically, in step (i) the swollen split is in the form of particles which are dispersed (suspended) in the water or water/organic solvent mixture. In one alternative embodiment, the swelling step (i) can be carried out in the water/organic solvent mixture described below for the optional dispersion step set forth under step (i).

In one embodiment the water used for swelling the split in step (i) does not comprise any derivatizing agent.

In the optional embodiment referred to above, the amount of organic solvent in said water/organic solvent mixture of step (i) is at least about 30% by weight.

In an alternative embodiment in the method described above at least two different endosperm splits, such as, for instance, splits of cassia and guar can be utilized as the endosperm source.

By following the method described in WO 2004/113390 the amount of impurities in the hydrocolloid, i.e., the cassia hydrocolloid is significantly reduced. By the addition of the organic solvents in an increasing amount relative to the swollen particles, compounds which are not desirable in the galactomannan hydrocolloid, such as, for instance, fats, proteins, fibers, ashes, and phytochemicals) (e.g., anthraquinones and derivatives thereof), are removed from the hydrocolloids together with the water. Increasing the ratio of organic solvent to water facilitates the removal of water and undesirable compounds from the galactomannan hydrocolloid. The cassia hydrocolloid obtainable by the method of WO 2004/113390 is colorless, odorless and tasteless. Typically the total amount of the fats, proteins and ashes in the galactomannan hydrocolloid is less than about 15% by weight, in another aspect it is less than about 12% by weight. Most importantly, however, the undesired compounds, such as the anthraquinones, are substantially absent from the obtained cassia hydrocolloid as described above. The presence of and the amount of the anthraquinones in hydrocolloids can be determined by conventional analytical methods such as HPLC or GC/MS. For details, it is referred to S.O. Mueller, et al., in Food and Chemical Toxicology, 37 (1999), pages 481 to 491, the disclosure of which is incorporated herein by reference.

As described in WO 2004/113390, hydrocolloid compositions with improved aesthetic properties (e.g., transparency, low turbidity, low odor, no taste and color), and improved physical properties (e.g., viscosity, break strength (also referred to as outer gel strength), gel strength (often referred to as inner gel strength) and purity are obtained. These properties allow the hydrocolloids produced by the disclosed method to be particularly suitable for food and fodder applications.

As used here and throughout the specification, the term "split" denotes the crude (raw or unprocessed) endosperm flour of cassia, locust bean (LBG), tara or guar that has not undergone any further treatment. As known in the art, the term split is often used interchangeably with the term "endosperm". The splits of cassia, locust bean, tara and guar are commercially available on the market. Typically, cassia is obtained from Cassia tora, Cassia obtusifolia or combinations thereof. In nature, Cassia tora and Cassia obtusifolia coexist in the same field and are typically co-harvested.

As used here and throughout the specification, the term "galactomannan" is used interchangeably with the term "polygalactomannan".

The water used for swelling the endosperm may contain additives selected from the group consisting of an alkalinity source, such as sodium hydroxide, potassium hydroxide; an acidity source, such as citric acid, acetic acid and ascorbic acid; buffers and buffering systems; enzymes such as proteases, neutrases, alkalases, pepsin; alkali metal salts, such as sodium or potassium chloride; or alkaline earth metal salts, such as calcium chloride, or combinations of said additives.

The weight ratio of water to flour (split) is at least about 1.5 to 1, and in another embodiment at least about 2 to 1. The weight ratio of water to flour should not exceed about 5 to 1 in one embodiment and about 4 to 1 in another embodiment (the weight ratios utilized in this description refer to the weight ratio of water to dry flour).

The pH of the aqueous phase in the swelling step can range between about 5 and up to about 13 in one aspect, and in another aspect between about 6 to about 8.

The swelling step takes between about 5 and 120 minutes in one aspect of the invention, and between about 10 and 80 minutes in another aspect. In a further aspect of the invention, the swelling step ranges between about 20 and 60 minutes. The water used to swell the split has a temperature range of from about 15°C to 100°C in one aspect, in another aspect up to about 50°C, and in a still further aspect of from about 20°C to 40°C. The mass can be stirred while swelling, the water used to swell the split can be added in total at the beginning of the step or metered in while stirring. Ideally, the water is added until no further swelling takes place.

According to one embodiment described in WO 2004/113390, the swollen endosperm obtained in step (i) is not dried but is subjected to a wet-mincing step (ii) as is. In an alternative embodiment, the swollen endosperm is dispersed in a water/organic solvent mixture to form a dispersion. The amount of organic solvent in said water/organic solvent mixture is, in the aspects in the order given, at least about 30, 35, 40, 45, 50, 55, or 60% by weight. In another aspect, the amount of organic solvent in the water/organic solvent mixture can range from about 70 to about 95% by weight based on the water/organic solvent mixture, and in a further aspect it can be at least 80% by weight.

The weight ratio of swollen endosperm (split) to water/organic solvent mixture is between about 1:3 to about 1:10 in one aspect, and between about 1:5 and about 1:8 in another aspect.

The organic solvent present in the water/organic solvent mixture used in the optional dispersion step (iii) is selected from the group of solvents that are miscible with water and that are not deleterious to health and safety. For food and fodder applications methanol, ethanol, n-propanol, iso-propanol and mixtures thereof are employed as the solvent in one aspect of the invention. A suitable ratio of water to alcohol such as, for instance, isopropanol is from about 15:85 to about 85:15 in one aspect of the invention, and from about 25:75 to about 50:50 in another aspect (all ratios are on a wt. to wt. basis). In a further aspect, the ratio of water to isopropanol can be about 30:70 (wt./wt.).

As used here and throughout the specification, the term "swollen split" is meant to encompass the swollen split itself or the swollen split that has been dispersed in the water/organic solvent mixture which is described above as an alternative embodiment of this invention.

For wet-mincing the swollen endosperm or, alternatively, the dispersion of the swollen endosperm in the water/organic solvent mixture, any mincing apparatus can be used which is suitable for mincing gummy or viscous materials. Exemplary mincing apparatuses are mincers or masticators, and cutting mills. Conventional meat mincers can be employed to mince or wet mince the swollen split. These devices are well known in the meat processing industry. In one embodiment, a Jupiter Model 885 meat mincer (Jupiter Kuechenmaschinenfabrik GmbH + Co., Germany) is utilized to mince the swollen split. The impact exerted by these machines on the product to be processed is low due to the low shear developed by these apparatuses. Generally, the temperature of the product processed by mincing does not raise significantly, typically not more than by about 5°C. This distinguishes meat-mincers from conventional extruders exerting high pressures and shear upon the processed product, resulting in a significant raise of the temperature of the processed product. Thus, "mincing" refers to an activity which is carried out under the mincing conditions described above in a mincing apparatus which can be represented by, in its simplest form, a meat-mincer. Of course, similar types of apparatus of any size and capacity providing for the mincing conditions described above are likewise suitable.

The term "mincing" and not "grinding" or "pulverizing" is employed. The term "grinding" is defined in WO 2004/112290 to denote a forceful tearing action exerted on the endosperm flour. Thus, by definition of this invention and the generally accepted definition in the lexicon, for instance, The American Heritage Dictionary (1985, Houghton Mifflin Company) "mincing" is defined to denote an action of cutting or chopping into very small pieces. This is in sharp contrast to the methodologies of "grinding" or "pulverizing" which are employed in conjunction with processes that were conventional prior to the priority date of WO 2004/113390. Grinding denotes an action of crushing, pulverizing or powdering by friction, especially by rubbing between two hard surfaces. Furthermore, "mincing" also is to be distinguished over "milling" which denotes an act of grinding, for example, grain into flour or meal. Thus, methods involving milling and grinding steps on the swollen split are specifically excluded from the scope of the method described in WO 2004/113390.

Most importantly, however, the method described in WO 2004/113390 leads to galactomannan hydrocolloids, in particular cassia hydrocolloids, which possess, in addition to being of high purity, improved properties in terms of viscosity, and gelation, such as gel strength and break strength, and heat stability compared to galactomannans which have been prepared in the traditional manner.

As used here and throughout the specification, the term "gum" is used interchangeably with the term "hydrocolloid". It denotes the galactomannan hydrocolloid obtained from the respective splits by processing, for instance, as described above.

Gelling and thickening agents are understood to be substances that are added to water or aqueous processing fluids, or to solid or liquid food or fodder, for example, during the production and processing stage, in order to achieve a desired consistency or viscosity. In the field of food in particular, the hydrocolloids obtained from the respective endosperm is characterized by its gelatinizing interaction with other hydrocolloids, by a high degree of efficiency and by the particularly low concentration needed.

Generally, the hydrocolloids, such as the cassia hydrocolloid disclosed in WO 2004/113390 can be used as stabilizer, texturizer, soluble fiber source, emulsifier, carrier, controlled active release for flavors, and as a water retention agent either as a single hydrocolloid or in combination with other hydrocolloids in various food applications as specified in the FDA Food Categories, Code of Federal Regulations 21 C.F.R. §170.3, which is incorporated herein by reference.

### Highly Esterified Pectin

Typically, in one embodiment the highly esterified pectin ("HE pectin") present in the thickener composition of the invention has a molecular weight of from about 50,000 Daltons to about 250,000 Daltons, in other embodiments from about 50,000 to about 200,000 Daltons or from about 50,000 to about 150,000 Daltons. By "highly esterified" there is meant that, in one aspect, at least about 50%, in another aspect at least about 60%, in a still further aspect at least about 65%, and in another aspect at least about 68% of all the carboxylic acid groups in the pectin molecule are esterified. In one embodiment the carboxylic acid groups are esterified by a methyl group. In one exemplary embodiment the pectin is selected from the group of citrus pectins, such as those derived from oranges, lemons, lime or grapefruits. In another embodiment, the thickener combination comprises citrus pectin in which the level of carboxyl group esterification is at least about 60% in one aspect, at least about 65% in another aspect, and at least about 68% in a further aspect, wherein the carboxyl-groups contained in the pectin molecule are esterified with a methyl group. Highly methylated pectins ("HM pectin") are commercially available, for instance, from Herbstreith & Fox, Germany.

### Thickener Composition

The thickener composition of the present invention comprises a cassia hydrocolloid component and a highly esterified pectin component. The thickener composition efficiently thickens water and any composition containing water (i.e., the composition considerably increases the viscosity of aqueous systems even when employed in small amounts). The thickened aqueous compositions typically comprise from about 0.1 % to about 10% by weight in one aspect, from about 0.2% to about 7% by weight in another aspect, and from about 0.2% to about 5% by weight in a further aspect, of the thickener composition of the invention, based on the weight of the composition.

Alternatively, the amount of the individual thickener components that make up the thickener composition (i.e., the cassia hydrocolloid and the highly esterified pectin) can individually range from about 0.1 % to about 8% by weight in one aspect, from about 0.2% to about 5% by weight in another aspect, and from about 0.2% to about 3% by weight in a further aspect, based on the weight of the thickened composition, provided that the total amount of cassia hydrocolloid and highly esterified pectin does not exceed the amounts stated above for the thickener composition (i.e., a total amount of up to about 10% by weight in one aspect, up to about 7% by weight in another aspect, and up to 5% by weight in a further aspect).

Generally, the thickener composition of the invention comprises the cassia hydrocolloid and the highly esterified pectin in a weight to weight ratio of cassia to highly esterified pectin of between about 90:10 to about 10:90 in one aspect, between about 80:20 to about 20:80 in another aspect, and between about 70:30 to about 30:70 in a further aspect, and 50:50 in a still further aspect. In food and fodder compositions desired viscosity levels can be achieved if the weight ratio of cassia hydrocolloid to the highly esterified pectin in the thickener composition is between about 80:20 to about 20 80 in one aspect and between about to 70:30 to about 30:70 in another aspect, and about 50:50 in still another aspect.

The thickener composition (cassia and highly esterified pectin) can be added to the food or fodder composition as a pre-blended admixture or, alternatively, the individual components of the thickener composition (i.e., the cassia hydrocolloid and the highly esterified pectin) can be added separately in the amounts specified above to the food or fodder product to be thickened. If desired, the cassia hydrocolloid component and the pectin component, individually or in a pre-blended admixture, can be dissolved in water prior to addition to the food or fodder product to be thickened. If the cassia hydrocolloid and the pectin component are added separately, the total amounts and the ratio of individual components set forth previously apply accordingly.

### Food Applications

The thickener composition of the present invention comprising cassia hydrocolloid and the highly esterified pectin, such as, for example, highly methylated citrus pectin, can be used alone or in combination with other gums such as locust bean gum, carrageenan, xanthan or tara gum, starch or gelatin in a wide variety of food products, including pet foods, such as wet pet-food. The compositions may employ food acceptable salts of mono-, di- or trivalent cations, preservatives such as sodium benzoate, citric acid or sorbic acid, or an ion sequestering agent such as citric, tartaric or orthophosphoric acids. The product may be dried and stored then, when converted to gel or sol form by hydration in cold or warm water systems, the thixotropic viscous colloidal dispersion thus formed may be used directly in food compositions. The viscosity developed is somewhat shear sensitive at low concentration and is dependent on temperature, concentration, pH, ionic strength as well as the induced agitation. Viscosities may be measured by a rotational, shear type viscometer capillary viscometer at low concentrations and extrusion rheometers at higher concentrations. Typically, viscosity is measured by a Brookfield RVT Viscometer (Brookfield Engineering Laboratories, Stoughton, Massachusetts) at 20 rpm or 100 rpm using spindles 3, 4, or 5, depending on the viscosity.

The thickener compositions of the present invention can be used to thicken food products selected from the groups of baked goods and baking mixes, including all ready-to-eat and ready-to-bake products, flours, and mixes requiring preparation before serving; beverages, alcoholic, including malt beverages, wines, distilled liquors, and cocktail mix; beverages and beverage bases, non-alcoholic, including only special or spiced teas, soft drinks, coffee substitutes, and fruit and vegetable flavored gelatin drinks; breakfast cereals, including ready-to-eat and instant and regular hot cereals; cheeses, including curd and whey cheeses, cream, natural, grating, processed, spread, dip, and miscellaneous cheeses; chewing gum, including all forms; coffee and tea, including regular, decaffeinated, and instant types; condiments and relishes, including plain seasoning sauces and spreads, olives, pickles, and relishes, but not spices or herbs; confections and frostings, including candy and flavored frostings, marshmallows, baking chocolate, and brown, lump, rock, maple, powdered, and raw sugars; dairy product analogs, including non-dairy milk, frozen or liquid creamers, coffee whiteners, toppings, and other non-dairy products; egg products, including liquid, frozen, or dried eggs, and egg dishes made therefrom, i.e., egg roll, egg foo young, egg salad, and frozen multi-course egg meals, but not fresh eggs; fats and oils, including margarine, dressings for salads, butter, salad oils, shortenings and cooking oils; fish products, including all prepared main dishes, salads, appetizers, frozen multi-course meals, and spreads containing fish, shellfish, and other aquatic animals, but not fresh fish; fresh eggs, including cooked eggs and egg dishes made only from fresh shell eggs; fresh fish, including only fresh and frozen fish, shellfish, and other aquatic animals; fresh fruits, fruit jellies and fruit juices, including only raw fruits, citrus, melons, and berries, and home-prepared "ades" and punches made therefrom; fresh meats, including only fresh or home-frozen beef or veal, pork, lamb or mutton and home-prepared fresh meat-containing dishes, salads, appetizers, or sandwich spreads made therefrom; fresh poultry, including only fresh or home-frozen poultry and game birds and home-prepared fresh poultry-containing dishes, salads, appetizers, or sandwich spreads made therefrom; fresh vegetables, tomatoes, and potatoes, including only fresh and home-prepared vegetables; frozen dairy desserts and mixes, including ice cream, ice milks, sherbets, and other frozen dairy desserts and specialties; fruit and water ices, including all frozen fruit and water ices; gelatins, puddings, and fillings, including flavored gelatin desserts, puddings, custards, parfaits, pie fillings, and gelatin base salads; grain products and pastas, including macaroni and noodle products, rice dishes, and frozen multi-course meals, without meat or vegetables; gravies and sauces, including all meat sauces and gravies, and tomato, milk, buttery, and specialty sauces; hard candy and cough drops, including all hard type candies; herbs, seeds, spices, seasonings, blends, extracts, and flavorings, including all natural and artificial spices, blends, and flavors; jams and jellies, home-prepared, including only home-prepared jams, jellies, fruit butters, preserves, and sweet spreads; toppings for cakes; jams and jellies, commercial, including only commercially processed jams, jellies, fruit butters, preserves, and sweet spreads; meat products, including all meats and meat containing dishes, salads, appetizers, frozen multi-course meat meals, and sandwich ingredients prepared by commercial processing or using commercially processed meats with home preparation; milk, whole and skim, including whole, low-fat, and skim fluid milk; milk products, including flavored milk and milk drinks, dry milk, toppings, snack dips, spreads, weight control milk based beverages, and other milk origin products; nuts and nut products, including whole or shelled tree nuts, peanuts, coconut, and nut and peanut spreads; plant protein products, including the National Academy of Sciences/National Research Council "reconstituted vegetable protein" category, and meat, poultry, and fish substitutes, analogs, and extender products made from plant proteins; poultry products, including all poultry and poultry-containing dishes, salads, appetizers, frozen multi-course poultry meals, and sandwich ingredients prepared by commercial processing or using commercially processed poultry with home preparation; processed fruits and fruit juices, including all commercially processed fruits, citrus, berries, and mixtures; salads, juices and juice punches, concentrates, dilutions, "ades", and drink substitutes made therefrom; processed vegetables and vegetable juices, including all commercially processed vegetables, vegetable dishes, frozen multi-course vegetable meals, and vegetable juices and blends; snack foods, including chips, pretzels, and other novelty snacks; soft candy, including candy bars, chocolates, fudge, mints, and other chewy or nougat candies; soups, home-prepared, including meat, fish, poultry, vegetable, and combination home-prepared soups; soups and soup mixes, including commercially prepared meat, fish, poultry, vegetable, and combination soups and soup mixes; sugar substitutes, including granulated, liquid, and tablet sugar substitutes; and sweet sauces, toppings, and syrups, including chocolate, berry, fruit, corn syrup, and maple sweet sauces and toppings. As mentioned above, the thickener compositions according to this invention can be added to meat and ground meat such as for making sausages and, for instance, aspic for meat products and hamburger patties without negatively affecting taste and mouth feel.

As discussed previously, the present invention is also directed to food and fodder compositions comprising the thickener compositions of the present invention. The amount of thickener composition in the food/fodder composition typically depends on the type of food/fodder.

In a further aspect, an exemplary embodiment concerns dairy and milk products, such as yogurt and heat treated yogurt thickened by the thickener composition of the present invention. The term "milk" is meant to include whole milk, skim milk, low-fat milk, and skim fluid milk; milk products, including flavored milk and milk drinks, dry milk. Typical milk products are yogurt both low fat and yogurt of higher fat content. The fat content of milk and yogurt can range from about 0% or about 0.1 % to about 4.2% by weight in one aspect, from about 0.2% to about 3.9% in another aspect, and from about 0.3% to about 3.8% by weight in still another aspect. Typical milk and yogurt have a fat content of up to about 3.8% or 3.9% by weight. Additionally there is fat free yogurt having a total fat content of 0% which can likewise be thickened using the thickener composition of the invention. The typical protein content of milk is from about 3% to about 4% by weight, and the protein content of yogurt is between about 3% and 6% by weight, depending on the type of milk and yogurt, respectively.

In one aspect, an exemplary embodiment of the present invention relates a heat treated yogurt composition comprising the synergistic thickener composition in the amounts described above. Such heat treated yogurts are typically prepared by dispersing the thickener composition into the yogurt composition with mixing (Ultra Turrax^{®} mixer at 10,000 rpm for 40 seconds). The cassia hydrocolloid and the highly esterified pectin can be pre-blended and subsequently added to the yogurt composition as an admixture. Alternatively, the cassia hydrocolloid and the highly esterified pectin can be added to the yogurt sequentially as separate components. The order of addition is not important. The cassia hydrocolloid and the highly esterified pectin (e.g., highly methylated pectin) can be dissolved or dispersed in water in admixture or dispersed separately in water prior to addition to the yogurt composition. After a swelling time of between about 1 and about 25 hours at a low temperature such as between about 5 and about 15°C in one aspect, and between about 7°C and about 12°C in another aspect, the yogurt composition can be heated, for instance, in a water bath to a temperature of between about 70°C to about 90°C in one aspect, between about 83°C to about 90°C in another aspect and at about 86°C in a further aspect. Thereafter the water bath is cooled to about 70°C. Then the yogurt composition is vigorously stirred, for instance, for about 60 seconds at about 10,000 rpm (Ultra Turrax mixer). The yogurt composition is then cooled to a temperature of about 20°C and stored at a temperature of between about 4°C and 8°C. Viscosity measurements are carried out 5 and 12 days after production on samples that are stored at a temperature of about 7°C. Another viscosity measurement is carried out on a sample stored for 21 days at a temperature of 20°C to simulate the quality of the yogurt at the end of their shelf life (a minimum of 10 weeks).

The thickened heat treated yogurt thus formed typically comprises from about 0.1% to about 10% by weight in one aspect, from about 0.2% to about 5% by weight in another aspect, and from about 0.2% to about 3% by weight in a further aspect, of the thickener composition of the invention, based on the total weight of the yogurt composition, or alternatively, the amounts of the individual constituents of the composition in the concentrations as mentioned above. In all embodiments of the invention, the heat treated yogurt can have varying consistencies from spoonable gel-like consistencies to drinkable liquid consistencies.

The fat content of said heat-treated yogurt can range from about 0.1 % to 4.2% by weight in one aspect, from about 0.2% to about 3.9% by weight in another aspect, and from about 0.3% to 3.8% by weight in a further aspect based on the weight of the yogurt. Typical yogurts have a fat content of up to about 3.8% or 3.9% by weight, based on the weight of the yogurt. There are, however, high fat content yogurts that have a fat content of up to 10% by weight.

Generally, yogurt also contains proteins in an amount of from about 3% to about 6% by weight in one aspect, from about 3.2% to 4.8% by weight in another aspect, and from about 3.2% to about 3.8% by weight in a further aspect, based on the weight of the yogurt composition. Fat content will vary depending on the type of yogurt. Typically, the pH of a particular type of yogurt is from about 4.0 to 4.5 in one aspect and from about 4.2 to about 4.4 in another aspect.

The amount of highly esterified pectin can be chosen so that it represents from about 5% to 20% by weight in one aspect, from about 5% to 15% by weight in another aspect, and from about 7% to about 13% by weight in a further aspect, based on the amount of protein in the dairy product, for instance, yogurts such as heat treated yogurt.

Another exemplary embodiment relates to heat treated yogurt comprising from about 0.2% to about 1.0% by weight of the yogurt composition of the present synergistic thickener composition comprising cassia hydrocolloid and pectin wherein at least 65% of all the carboxyl groups in the pectin molecule are esterified by a C₁ to C₅ alkyl group. An exemplary alkyl group is methyl. In another aspect the pectin is citrus pectin wherein at least 65% of the carboxyl groups in the pectin molecule are esterified by a C₁ to C₅ alkyl group. An exemplary alkyl group is methyl. In a further exemplary embodiment, said yogurt composition further comprises from about 0.1 to about 4.2% by weight of fat and about 3.0% to about 4.0% by weight of proteins, based on the weight of the yogurt composition.

The drinkable heat-treated yogurt compositions are generally thickened with a thickener composition containing a weight ratio of cassia hydrocolloid to pectin of 1 or less. In another aspect the weight to weight ratio of cassia hydrocolloid to pectin ranges from about 20:80 to about 50:50.

In addition to the thickeners and the typical constituents of yogurt, yogurt can also contain sugar (sucrose) in an amount of between about 2% and 4% by weight of the yogurt composition.

The yogurt can further contain calcium and sodium based preservatives such as potassium sorbate and flavors such as vanilla, chocolate, and/or fruit in conventional amounts.

In one aspect, all of the above description in conjunction with dairy products applies to heat treated yogurt, and in a further aspect it applies to yogurt that contains the thickener composition which comprises the highly methylated citrus pectins described above.

It has been surprisingly found that a combination of cassia hydrocolloid and highly esterified pectin, such as, for example, highly methylated citrus pectin, gives rise to an improved thickening effect, improved mouth texture properties (e.g., less grittiness), and improved resistance to sedimentation over time when compared to combinations of the respective highly esterified pectins with other polygalactomannans such as locust bean gum, guar gum, and tara gum. It was discovered that the combination of cassia hydrocolloid and highly esterified pectin exhibits a much better water retention ability compared to the other polygalactomannans mentioned above. Furthermore, it was found that the thickener composition according to the invention not only exhibits higher viscosities but retains viscosity properties under long term storage conditions, even at elevated storage temperatures. These compositions prolong the self-life of food and fodder compositions which must retain their consistency and texture for extended periods of time.

Because of the ephemeral nature of dairy products in terms of self-life stability, the present thickener compositions are particularly useful in milk product and yogurt applications. In one exemplary embodiment, raw yogurt exhibits superior thickening and stability effects after adding the present thickener composition and subsequently heat treating the yogurt at a temperature of from about 70°C to about 90°C in one aspect and from about 83°C to about 90°C in another aspect, which temperature ranges corresponds to the temperature needed to achieve complete hydration of the polygalactomannans such as the cassia hydrocolloid. Therefore, the examples which follow focus on yogurt applications as being representative for food applications in general.

The following examples are for illustrative purposes and are not intended to limit the invention in any way. It is to be understood that the invention may be carried out on different equipment and devices and that various modifications, both as to the starting materials, equipment details and operating procedures, may be accomplished without departing from the true spirit and scope of the claimed invention.

### EXAMPLES

### Materials and Methods

Starting materials (if not otherwise specified):
(a) Cassia: cassia tora/obtusifolia gum, commercially available from Noveon Inc., under the trade designation RheoRanger™ SR
(b) Locust bean: locust bean gum, commercially available from Danisco, Denmark under the trade designation L147
(c) Tara: tara split gum, commercially available from Globe, India
(d) Guar: guar split gum, commercially available from Unipektin, Switzerland, under the trade designation Vidogum GH 200
(e) Highly esterified pectin: methylated citrus pectin having a degree of esterification of 68%, commercially available from Herbstreith & Fox, Germany under the trade designation Classic CM 203
(f) Yogurt: commercially available yogurt. The fat content and protein content are specified in the individual examples. All yogurts used contain about 4% by weight of sugar for dispersing the hydrocolloid and about 0.33% by weight of potassium sorbate as a preservative. The yogurts have pH values of between about 4.2 and 4.4.

### Viscosity Measurement Method:

The amounts of galactomannan hydrocolloid and highly esterified pectin as specified in conjunction with the individual examples are pre-dispersed in water and then added to the yogurt. The yogurt composition is thoroughly mixed for 40 seconds at 10,000 rpm using an Ultra Turra^{®} T25 from IKA. After a swelling time of 19 hours at 9°C the yogurt composition is heated in a water bath to a temperature of 86°C. Thereafter the water bath is cooled to about 70°C. Then the yogurt composition is vigorously stirred for 60 seconds at 10,000 rpm (Ultra Turrax T25). Finally, the yogurt composition is cooled to a temperature of about 20°C and stored at a temperature of 7°C or 20°C for the time specified. The viscosity measurements were carried out 5 and 12 days after production storage at 7°C. For other samples measurements are made after 21 days storage at 20°C in order to simulate the quality of the yogurt at the end of their shelf life cycle (minimum of 10 weeks). The viscosity is then measured by using a Brookfield RVT Digital Viscometer at a speed of 20 rpm or 100 rpm (see examples) using a RVT Brookfield spindle (20 rpm: spindle size 3 or 4; 100 rpm: spindle size 3, 4 or 5; depending on the viscosity level of the product). Times and temperatures are as specified in conjunction with the respective examples.

### General Procedure

A 10% solution of the highly methylated pectin is prepared, heated to 90°C and subsequently cooled to room temperature (20°C). The calculated amount of hydrocolloid is then added to this solution. The amounts of galactomannan hydrocolloid and pectin are specified in conjunction with the individual examples. The resulting pre-blend is added to the (raw) yogurt which has not yet been heat treated. The yogurt composition is thoroughly mixed for 40 seconds at 10,000 rpm using an Ultra Turrax^{®} T25. After a swelling time of 19 hours at 9°C, the yogurt composition is heated in a water bath to a temperature of 86°C. Thereafter the water bath is cooled to about 70°C. Then the yogurt composition is vigorously stirred for 60 seconds at 10,000 rpm (Ultra Turrax T25). Finally, the yogurt composition is cooled to a temperature of about 20°C and stored at a temperature of 7°C or 20°C. The viscosity measurement is then carried out after the time and at the temperature specified in conjunction with the respective examples. The sample size is approximately 180 g. The experiments and the results obtained are summarized in the Tables that follow and the corresponding Figures.

### Results

**Table 1**

| Viscosity of heat treated yogurt (3.9% fat: 3.6% protein) | | | | |
|---|---|---|---|---|
| Galactomannan (wt. %) | Pectin (wt. %) | Viscosity¹ 5 days/7°C (mPa·s) | Viscosity¹ 12 days/7°C (mPa·s) | Viscosity¹ 21 days/20°C (mPa·s) |
| Cassia; 0.2 | 0.3 | 1765 | 2700 | 3800 |
| LBG; 0.2 | 0.3 | 1270 | 1350 | 1000 |
| Guar; 0.2 | 0.3 | 925 | 965 | 988 |
| Tara; 0.2 | 0.3 | 750 | 770 | 1130 |

| | | | | |
|---|---|---|---|---|
| Brookfield Viscosity, measured at 7°C, 20 rpm, Spindle 3 and 4 | | | | |

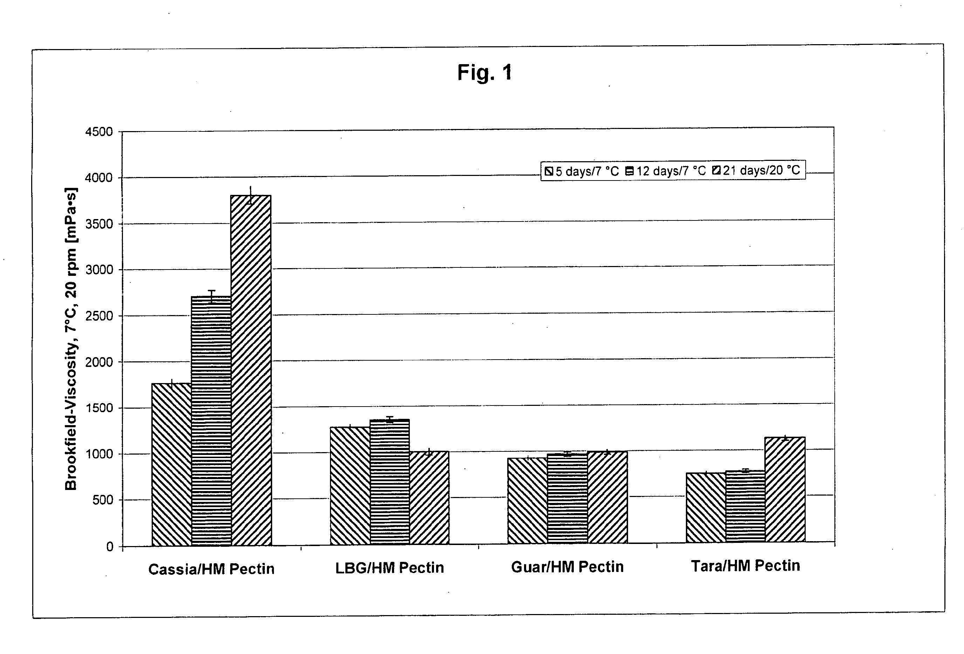

Cassia hydrocolloid used together with highly esterified citrus pectin in heat treated yogurt increases the viscosity significantly higher than a LBG/pectin, guar/pectin or tara/pectin system that is used in the same concentration. Figure 1 is a diagrammatic representation of the results set forth in Table 1 above.

**Table 2**

| Viscosity of heat treated yogurt (3.9% fat; 3.6% protein) | | | | |
|---|---|---|---|---|
| Galactomannan (wt. %) | Pectin (wt. %) | Viscosity¹ 5 days/7°C (mPa·s) | Viscosity¹ 12 days/7°C (mPa·s) | Viscosity¹ 21 days/20°C (mPa·s) |
| Cassia; 0.2 | 0.3 | 860 | 1060 | 1216 |
| LBG; 0.2 | 0.3 | 760 | 780 | 1000 |
| Guar; 0.2 | 0.3 | 588 | 610 | 640 |
| Tara; 0.2 | 0.3 | 515 | 510 | 740 |

| | | | | |
|---|---|---|---|---|
| ¹Brookfield Viscosity, measured at 7°C, 100 rpm, Spindle 3, 4 and 5 | | | | |

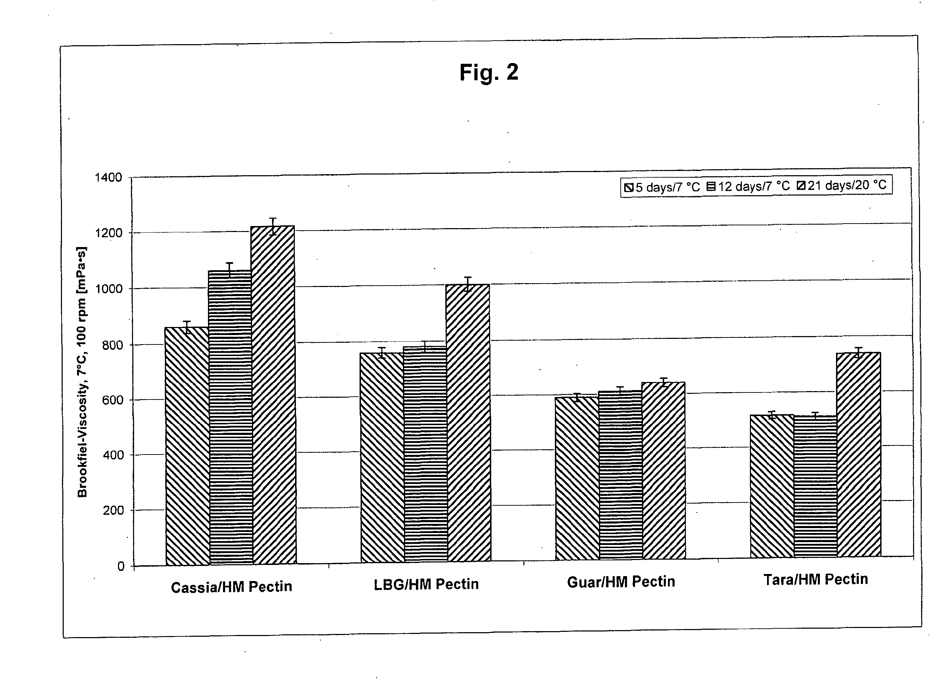

A shear rate of 100 rpm simulates the haptic feeling (mouth feel) of the specific yogurt and provides a good indication of sensorial differences between the samples in terms of "creaminess", "thick/thin". Figure 2 is a diagrammatic representation of the results set forth in Table 2 above.

**Table 3**

| Viscosity of heat treated yogurt (3.5% fat; 3.6% protein) | | | |
|---|---|---|---|
| Cassia (wt. %) | Pectin (wt. %) | Viscosity¹ 5 days/7°C (mPa·s) | Viscosity¹ 14 days/20°C (mPa·s) |
| 0.20 | 0.30 | 406 | 880 |
| 0.25 | 0.25 | 690 | 1440 |
| 0.30 | 0.20 | 870 | 2200 |
| 0.20 | 0.20 | 314 | 920 |

| | | | |
|---|---|---|---|
| ¹Brookfield Viscosity, measured at 7°C, 20 rpm, Spindle 3 and 4 | | | |

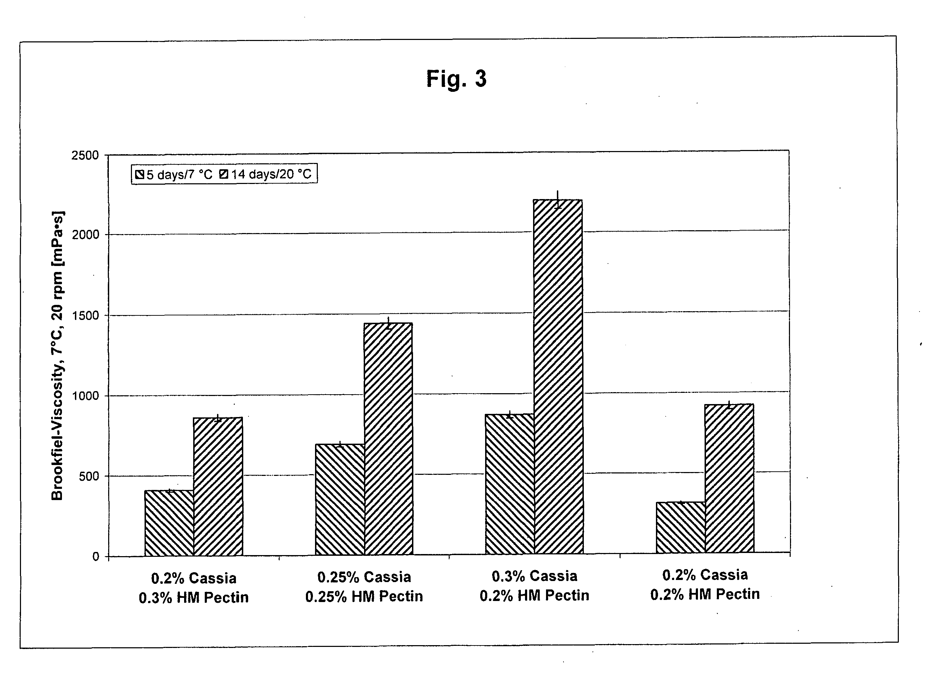

The results show still more potentials for texturizing after changing the ratio between cassia hydrocolloid and the highly esterified pectin as well as an example for cost saving by decreasing the concentration of the whole blend from 0.5 to 0.4%, whilst the apparent optimum ratio of 60% cassia hydrocolloid : 40% pectin was even not yet applied. Figure 3 is a diagrammatic representation of the results set forth in Table 3 above.

## Claims

1. A thickener composition comprising:
a) cassia hydrocolloid; and
b) highly esterified pectin.
**characterized in that** the weight ratio of cassia hydrocolloid to highly esterified pectin is from 90:10 to 10:90.

2. The thickener composition of claim 1 wherein the weight ratio of cassia hydrocolloid to highly esterified pectin is from 80:20 to 40:60, preferably from 70:30 to 50:50.

3. The thickener composition of claim 1 wherein the cassia hydrocolloid is obtained from *cassia tora, cassia obtusifolia,* and combinations thereof.

4. The thickener composition of claim 1 wherein at least 60% of all the carboxylic acid groups in the pectin molecule are esterified.

5. The thickener composition of claim 4 wherein the carboxylic acid groups are esterified with a methyl group.

6. The thickener composition of claim 1 wherein said pectin is citrus pectin.

7. The thickener composition of claim 1 wherein said pectin has a molecular weight of from 50,000 Daltons to 250,000 Daltons.

8. A food composition comprising the thickener composition as defined in any of claims 1 to 7.

9. The food composition of claim 8 further comprising fat and proteins.

10. The food composition of claim 9 comprising a dairy component selected from milk, whole milk, skim milk, low fat milk, skim fluid milk, yogurt, and heat-treated yogurt.

11. The food composition of claim 10 wherein said dairy component comprises from 0.1 weight percent to 4.2 weight percent of fat, based on the total weight of the dairy product in the composition, and, preferably additionally said dairy component comprises from 3.0 weight percent to 4.0 weight percent of proteins, based on the total weight of the dairy product in the composition.

12. The food composition of claim 11 wherein said dairy component is selected from yogurt, preferably said yogurt being heat-treated.

13. The food composition of claim 12 wherein said pectin is citrus pectin and at least 65% of all the carboxyl groups in the pectin molecule are esterified by a methyl group.

14. The dairy food composition of claim 13 wherein said yogurt comprises from 0.1 to 4.2 weight percent of fat and 3.0 to 4.0 weight percent of proteins, based on the weight of the yogurt.

15. The heat-treated yogurt of claim 14 wherein the weight ratio of cassia hydrocolloid to methylated citrus pectin is from 65:35 to 55:45, based on the amount of cassia hydrocolloid and methylated citrus pectin, and preferably wherein said thickener composition is present in an amount of from 0.1 to 10 weight percent, based on the weight of the total composition.

16. A method for thickening a food or fodder composition comprising adding the thickener composition as defined in any of claims 1 to 7.

## Patentansprüche

1. Verdickungsmittelzusammensetzung, umfassend:
a) Cassia-Hydrokolloid; und
b) hochgradig verestertes Pektin;
**dadurch gekennzeichnet, dass** das Gewichtsverhältnis von Cassia-Hydrokolloid zu hochgradig verestertem Pektin 90:10 bis 10:90 beträgt.

2. Verdickungsmittelzusammensetzung gemäß Anspruch 1, wobei das Gewichtsverhältnis von Cassia-Hydrokolloid zu hochgradig verestertem Pektin 80:20 bis 40:60, vorzugsweise 70:30 bis 50:50, beträgt.

3. Verdickungsmittelzusammensetzung gemäß Anspruch 1, wobei das Cassia-Hydrokolloid von *Cassia tora, Cassia obtusifolia* und Kombinationen davon erhalten ist.

4. Verdickungsmittelzusammensetzung gemäß Anspruch 1, wobei wenigstens 60% aller Carbonsäuregruppen in dem Pektinmolekül verestert sind.

5. Verdickungsmittelzusammensetzung gemäß Anspruch 4, wobei die Carbonsäuregruppen mit einer Methylgruppe verestert sind.

6. Verdickungsmittelzusammensetzung gemäß Anspruch 1, wobei es sich bei dem Pektin um Zitruspektin handelt.

7. Verdickungsmittelzusammensetzung gemäß Anspruch 1, wobei das Pektin ein Molekulargewicht von 50 000 Dalton bis 250 000 Dalton hat.

8. Nahrungsmittelzusammensetzung, die die Verdickungsmittelzusammensetzung gemäß einem der Ansprüche 1 bis 7 umfasst.

9. Nahrungsmittelzusammensetzung gemäß Anspruch 8, die weiterhin Fett und Proteine umfasst.

10. Nahrungsmittelzusammensetzung gemäß Anspruch 9, die eine Milchproduktkomponente umfasst, die aus Milch, Vollmilch, fettfreier Milch, fettarmer Milch, Magermilch, Joghurt und wärmebehandeltem Joghurt ausgewählt ist.

11. Nahrungsmittelzusammensetzung gemäß Anspruch 10, wobei die Milchproduktkomponente 0,1 Gew.-% bis 4,2 Gew.-% Fett umfasst, bezogen auf das Gesamtgewicht des Milchprodukts in der Zusammensetzung, und wobei die Milchproduktkomponente vorzugsweise zusätzlich 3,0 Gew.-% bis 4,0 Gew.-% Proteine umfasst, bezogen auf das Gesamtgewicht des Milchprodukts in der Zusammensetzung.

12. Nahrungsmittelzusammensetzung gemäß Anspruch 11, wobei die Milchproduktkomponente aus Joghurt ausgewählt ist, wobei der Joghurt vorzugsweise wärmebehandelt ist.

13. Nahrungsmittelzusammensetzung gemäß Anspruch 12, wobei es sich bei dem Pektin um Zitruspektin handelt und wenigstens 65% aller Carboxygruppen in dem Pektinmolekül durch eine Methylgruppe verestert sind.

14. Milchproduktnahrungsmittelzusammensetzung gemäß Anspruch 13, wobei der Joghurt 0,1 bis 4,2 Gew.-% Fett und 3,0 bis 4,0 Gew.-% Proteine umfasst, bezogen auf das Gewicht des Joghurts.

15. Wärmebehandelter Joghurt gemäß Anspruch 14, wobei das Gewichtsverhältnis von Cassia-Hydrokolloid zu methyliertem Zitruspektin 65:35 bis 55:45 beträgt, bezogen auf die Menge des Cassia-Hydrokolloids und des methylierten Zitruspektins, und wobei die Verdickungsmittelzusammensetzung vorzugsweise in einer Menge von 0,1 bis 10 Gew.-% vorhanden ist, bezogen auf das Gewicht der gesamten Zusammensetzung.

16. Verfahren zur Verdickung einer Nahrungsmittel- oder Futterzusammensetzung, umfassend das Hinzufügen der Verdickungsmittelzusammensetzung gemäß einem der Ansprüche 1 bis 7.

## Revendications

1. Composition épaississante comprenant :
a) un hydrocolloïde de casse ; et
b) une pectine hautement estérifiée,
**caractérisée en ce que** le rapport en poids de l'hydrocolloïde de casse à la pectine hautement estérifiée est de 90 : 10 à 10 : 90.

2. Composition épaississante selon la revendication 1 où le rapport en poids de l'hydrocolloïde de casse à la pectine hautement estérifiée est de 80 : 20 à 40 : 60, de préférence de 70 : 30 à 50 : 50.

3. Composition épaississante selon la revendication 1 où l'hydrocolloïde de casse est obtenu à partir de *cassia tora, cassia obtusifolia* et leurs combinaisons.

4. Composition épaississante selon la revendication 1 où au moins 60 % de tous les groupes acide carboxylique dans la molécule de pectine sont estérifiés.

5. Composition épaississante selon la revendication 4 où les groupes acide carboxylique sont estérifiés avec un groupe méthyle.

6. Composition épaississante selon la revendication 1 où ladite pectine est de la pectine d'agrumes.

7. Composition épaississante selon la revendication 1 où ladite pectine a une masse moléculaire de 50000 Daltons à 250000 Daltons.

8. Composition alimentaire comprenant la composition épaississante selon l'une quelconque des revendications 1 à 7.

9. Composition alimentaire selon la revendication 8 comprenant en outre de la graisse et des protéines.

10. Composition alimentaire selon la revendication 9 comprenant un composant lacté choisi parmi le lait, le lait entier, le lait écrémé, le lait à faible teneur en graisse, le lait fluide écrémé, le yaourt et le yaourt traité thermiquement.

11. Composition alimentaire selon la revendication 10 où ledit composant lacté comprend de 0,1 % en poids à 4,2 % en poids de graisse, sur la base du poids total du produit lacté dans la composition, et, de préférence en outre ledit composant lacté comprend de 3,0 % en poids à 4,0 % en poids de protéines, sur la base du poids total du produit lacté dans la composition.

12. Composition alimentaire selon la revendication 11 où ledit composant lacté est choisi parmi le yaourt, de préférence ledit yaourt étant traité thermiquement.

13. Composition alimentaire selon la revendication 12 où ladite pectine est de la pectine d'agrumes et au moins 65 % de tous les groupes carboxyle dans la molécule de pectine sont estérifiés par un groupe méthyle.

14. Composition alimentaire lactée selon la revendication 13 où ledit yaourt comprend de 0,1 à 4,2 % en poids de graisse et 3,0 à 4,0 % en poids de protéines, sur la base du poids du yaourt.

15. Yaourt traité thermiquement selon la revendication 14 où le rapport en poids de l'hydrocolloïde de casse à la pectine d'agrumes méthylée est de 65 : 35 à 55 : 45, sur la base de la quantité d'hydrocolloïde de casse et de pectine d'agrumes méthylée, et de préférence où ladite composition épaississante est présente en une quantité de 0,1 à 10 % en poids, sur la base du poids de la composition totale.

16. Procédé pour épaissir une composition alimentaire ou fourragère comprenant l'addition de la composition épaississante selon l'une quelconque des revendications 1 à 7.
